# EUROPÄISCHE PATENTSCHRIFT

(11) **EP 3 173 617 B1**
(45) Veröffentlichungstag und Bekanntmachung des Hinweises auf die Patenterteilung: **07.08.2019**
(21) Anmeldenummer: 16020472.3
(22) Anmeldetag: 29.11.2016
(51) Int. Cl.: F03D 7/04, F03D 1/04

(54) **WINDENERGIEANLAGE**
WINDPOWER PLANT
ÉOLIENNE

(30) Priorität: 30.11.2015 HU 1500575
(43) Veröffentlichungstag der Anmeldung: 31.05.2017
(73) Patentinhaber: Molnár, János, 5430 Ungarn (HU)
(72) Erfinder: Molnár, János, 5430 Ungarn (HU)
(74) Vertreter: Frey, Julianna

(56) Entgegenhaltungen:
- WO-A1-2012/125128
- CN-A- 102 272 444
- DE-A1- 19 644 917
- US-A1- 2015 054 286

## Beschreibung

Die Erfindung betrifft eine Windenergieanlage, deren kreisförmiger Querschnitt-Lufteintrittssektor mit einem aus gelenkigen Elementen bestehenden Luftumlenkungssektor zusammengebaut ist. In einer Symmetrieachse des Lufteintrittssektors befindet sich ein Windmotor, der vorzugsweise auf einer gemeinsamen Achse mit einer Energierückgewinnungseinheit befindet. Der Lufteintrittssektor bildet mit dem Luftaustrittssektor einen gemeinsamen zylindrischen Kanal. Der Lufteintrittssektor und der Luftumlenkungssektor sind miteinander durch einen Steuermechanismus verbunden. Die Windenergieanlage ist weiterhin mit einem Mechanismus versehen, der die Vorrichtung in die jeweilige vorherrschende Windrichtung einstellt.

Für die Nutzung der Windenergie - insbesondere für die Erzeugung der elektrischen Energie - sind weltweit verschiedene Windmotoren, Windenergieanlagen eingesetzt, für deren Verbesserung weltweit eine Reihe von neuen Lösungen entwickelt wurde, da uns der Energieversorger Wind kostenlos zur Verfügung steht, und diese Ausrüstungen zur Energieversorgung keine negativen Auswirkungen auf die Umwelt haben. Die Nutzung der Windenergie ist aufgrund der ständigen Änderungen der Windgeschwindigkeit und der Windrichtung notwendigerweise eine komplexe Aufgabe.

Zahlreiche Patentanmeldungen befassen sich mit der Verbesserung der Leistung des Wirkungsgrades der Windräder und Windenergieanlagen.

*Aus der deutschen Patentbeschreibung* DE 19644917 A1 *ist eine mit einem Sturmschutz versehene Windturbine kennen zu lernen. Diese Windturbine enthält eine Mantelturbine und einen Einlauftrichter. Der Einlauftrichter hat am vorderen unteren Bereich eine Durchflussöffnung. Bei Normalbetrieb ist die Durchflussöffnung durch ein Steuerschild mehr oder weniger verschlossen, zur gleichen Zeit ist der Zustrombereich zur Turbine frei. Bei Sturm wird das Steuerschild so weit angehoben, dass die Durchflussöffnung frei gemacht wird, dadurch wird der erhöhte Druck ohne Beschädigung reduziert, während die Turbine und der Generator vollständig geschützt sind. Die Einstellung des Steuerschilds erfolgt durch die Regelung der Windmenge oder des Winddrucks automatisch. Die Windrichtungsverfolgung des konusförmigen Mantels um die Achse erfolgt nach dem Prinzip des Windsacks oder mithilfe einer eingebauten Windplatte automatisch. Diese Lösung verbessert nicht die Leistung oder Effizienz der Windkraftanlage.*

Aus der Beschreibung der deutschen Patentschrift DE 195 01 036 kann eine Windmaschine mit Blättern vertikaler Achse kennen gelernt werden, deren Windrad eine der Luftströmung senkrecht stehende Drehachse hat. Die Lösung besteht darin, dass sie einen als eine Einheit entwickelten Vorrichtungsteil hat, der sowohl nach dem Prinzip des Widerstandes, als auch dem des aerodynamischen Wirbels funktioniert, so macht er die Verwendung separater Steuermechanismen zu den Blattelementen überflüssig.

Der Gegenstand der ungarischen Patent HU-Nr. P 74198 ist ein Windmotor, der einen Schaufelkranzhat, der aus an eine drehbare horizontale Achse angeschlossenen Schaufeln besteht. Diese horizontale Achse ist mit einem Bootskörper verbunden, der Schaufelkranz befindet sich oberhalb des Bootskörpers, und mit der Interpolation einer vertikalen Achse und der entsprechenden Verbindungen ist mit einer horizontalen Achse verbunden, welche sich unter dem Rumpf des Bootskörpers erstreckt, und am Ende des hinteren Teils des Bootskörpers sich der Propeller befindet. Wenn der Wind den Schaufelkranz dreht, wird die Drehung auf den ins Wasser getauchte Propeller übertragen, wodurch sich der Bootskörper bewegt.

Gegenstand der HU-Nr. P100041 veröffentlichten Patentanmeldung ist ein Windturbinengehäuse mit vertikaler Achse und Steuerung. Die Erfindung betrifft ein Kraftwerk mit einer vertikalen Achse, für das charakteristisch ist, dass die Steuerung des durch den Wind gedrehten Windrades mit horizontaler Achse durch die Steuerung des das Windrad deckenden Gehäuses durchgeführt werden kann. Die Bekanntgabe behandelt eines der wichtigsten Probleme der Windgeneratoren, das ist der Steuerung. Die wechselnde Windstärke verursacht in der Konstruktion der Vorrichtung eine extreme Belastung. Der Betrieb der Geräte muss in Grenzen gehalten werden. Eine Steigerung der Effizienz hat diese Lösung nicht zur Folge.

Titel der unter HU-Nr. P1000566 veröffentlichten Patentanmeldung ist: Windgenerator mit Doppelrotor von vertikaler Achse. Gegenstand der Lösung ist ein mit einer mit zwei gegenläufig rotierenden, zwei Schaufelreihen von gegenüberliegenden Profilen und Rotor ausgestatteter Generator von vertikaler Achse. Die beiden gegenüberliegenden Rotorprofile bieten einen ausgewogeneren Betrieb, aber eine Steigerung der Effizienz ist auch hier nicht sichergestellt.

Gegenstand der Patentanmeldung HU-Nr. P1100391 ist eine Beschleunigungskonstruktion zur Verbesserung der Effizienz von Kantenklemmen und Luftströmung der Windgeneratoren mit vertikaler Achse. Gegenstand der Lösung ist eine sich automatisch in Windrichtung stellende Konstruktion, die an Windgeneratoren angeschlossen deren nützliche Arbeitsfläche erhöht und hilft, die Geschwindigkeit des Windes zu steigern, und eine bessere Leistung zu erreichen. Es gehört zu den Lösungen, die die Effizienz der Windkraft dadurch zu verbessern suchen, indem sie sie konzentrieren.

Gegenstand der unter HU-Nr. P0800069 veröffentlichten Lösung ist ein Rückgewinnungssystem der Windstärke mit stufenweiseanschließbaren Generatoren mit veränderlichem Windwiderstand in Form eines Kegelmantels. Die durch die in das kegelmantelförmige Gehäuse geschnittenen Öffnungen angebrachte Empfangsvorrichtung ist mit Deckplatten versehen, die die Öffnung in der Ebene schließen und öffnen, und sogar als sich aus der Ebene hervorragenden windabweisenden Elemente benutzt werden können. Die lösbar angeschlossenen Generator-Paare werden durch die Bandschaufeln mit Hilfe von fester und fest gleitender Bindung getrieben. Zur Konstruktion ist eine Hilfssteuerstruktur erforderlich, und während der Nutzbarmachung der Windkraft tritt keine Zunahme des Wirkungsgrades ein.

Die PCT-Anmeldung unter internationaler Veröffentlichungsnummer WO 2008/016584 A2 betrifft eine Windenergieanlage, die Elemente zur Bildung von Luftumlenkungsoberflächen, einen Windkanal und darin positionierte, an eine Achse angebrachte Profile enthält, die aufgrund der Luftströmung eine Drehbewegung durchführen. Die Drehbewegung durchführende Achse ist mit einem Generator verbunden. Die an den Luftumlenkungsoberflächen gebildeten Steuerungskonstruktionen funktionieren bei einer extremen Windbelastung so, dass sie an der Luftumlenkungsoberfläche Öffnungen aufmachen, so kann eine Schädigung der Vorrichtung vermieden werden. Die Lösung kann nicht wirklich die Effizienz verbessern.

Gegenstand der PCT-Veröffentlichung unter internationaler Nr. WO 2012/088562 A1 ist eine mit rückziehbarer Wandplatte und Luftleitblechen ausgestattete Windturbine. Der Eintrittsabschnitt des Luftstroms der Windturbine ist mit einem Windkanal verbunden, der die Turbine enthält, und dessen anderes Ende ein Austrittsabschnitt des Luftstroms ist. Die Ein- und Austrittsabschnitte des Windes bestehen aus einer modularen gitterartigen Haltekonstruktion, sowie aus rückziehbaren modular vorgefertigten Wandplatten. Die Eintritts- und Austrittsabschnitte des Windes können der vorherrschenden Windgeschwindigkeit angepasst, durch Bewegen der modularen Wandplatten gesteuert werden. Die die Steuerung durchführende Bewegungskonstruktion ist mit Leistungssteuerungselementen versehen, und bewegt die Elemente der Luftumlenkungsoberflächen in zwei Richtungen. Aus dieser Erfindung ist nicht wirklich herauszufinden, wie Luftrichtungsänderungen durch das Gerät behandelt werden.

Die mit der Erfindung zu lösende Aufgabe ist, eine Windenergieanlage zu schaffen, die die Energie des Windes zu einem gegebenen Zeitpunkt immer mit optimaler Effizienz nutzbar macht, das heißt, einen höheren Grad an Effizienz erreicht.

Der Erfindung liegt die Erkenntnis zugrunde, dass die oben erwähnte Verbesserung der Effizienz durch die Kombination drei wesentlicher Bedingungen erreicht werden kann.

Die erste Bedingung ist, dass man das Windrad in der Konstruktion ständig gegen die Windrichtung soll laufen lassen, so dass die Windrichtung parallel zur Achse des Schaufelkranzes strömt. Dazu sind eingebaute Elemente zu verwenden, die dieses Ziel gewährleisten können.

Die zweite Bedingung ist, dass es möglich wird, schon in einem relativ niedrigen Windgeschwindigkeitsbereich Betriebsfähigkeit zu erreichen. Eine der optimalen Lösungen dafür, wenn ein Luftumlenkungssektor vor den Lufteintrittssektor der Windenergieanlage eingebaut wird, der die Luftgeschwindigkeit, und dadurch deren Energie im Eintrittssektor beschleunigt. Dafür ist die parabolische Rotationsfläche am meisten geeignet.

Die dritte Bedingung ist, dass die Windenergieanlage möglicherweise auf der breitesten Skala der Windgeschwindigkeit betrieben werden kann. Um dieses Ziel zu erreichen, muss das Kraftwerk mit einer Steuerung versehen werden, wo der Windumlenkungssektor mit dem Windaustrittsektor eine Zwei-Wege-Kommunikationsverbindung ausführt.

Basierend auf den obigen Erkenntnissen wird die Aufgabe durch eine Windenergieanlage verwirklicht, die über einen Lufteintrittssektor und einen verbundenen, aufgeteilten Luftumlenkungssektor verfügt. In der Symmetrieachse des Eintrittssektors befindet sich der Windmotor, der vorzugsweise mit der Energierückgewinnungseinheit auf einer gemeinsamen Achse untergebracht ist. Der Eintrittssektor bildet mit dem Austrittssektor einen gemeinsamen zylindrischen Kanal. Der Austrittssektor und der Luftumlenkungssektor sind miteinander durch eine Steuerungsvorrichtung verbunden.

Die Windenergieanlage ist ferner mit einer Vorrichtung versehen, die die Einstellung in die jeweilig vorherrschende Windrichtung gewährleistet.

Gemäß einer bevorzugten Ausführungsform verfügt die Windenergieanlage über einen Eintrittssektor mit einem kreisförmigen Querschnitt, der vorne, im Bereich des Eintritts des Windstroms vorzugsweise mit einem Luftumlenkungssektor aus parabolischen Kreisteilen verbunden ist. Der Eintrittssektor und der Austrittssektor, die geometrisch zylindrisch sind, bilden einen einheitlichen Raum, und die dem Luftstrom entgegengesetzte Seite des Austrittssektors ist geschlossen. In der Symmetrieachse des Eintrittssektors werden der Windmotor und die Energierückgewinnungseinrichtung, vorzugsweise ein Windgenerator montiert. Die zylindrische Manteloberfläche des Austrittsektors ist in gleichmäßigen Abständen mit axial ausgedehnten rechteckigen Ausschnitten versehen. Durch diese Ausschnitte wird die Entfernung der Luft aus der Windenergieanlage gewährleistet. Ferner ist im Austrittssektor eine, in die vertikale Mittellinie des Austrittssektors gefügte kreisförmige, kompakte Scheibe, als Einstellrad montiert. Das Einstellrad ist mit einem festsitzenden Stabwerk verbunden, wo die Anzahl der Stäbe zwei, oder vorzugsweise ein Vielfaches davon sein kann. Diese Stäbe können sich in den an der Manteloberfläche des Austrittssektors positionierten Ausschnitten geführt axial bewegen. Die ganze Konstruktion der Windenergieanlage wird unten durch einen, vorzugsweise unter dem Eintrittssektor untergebrachten Gelenkmechanismus, und einen dazu befestigten Hauptträger gehalten. Der Hauptträger und die Manteloberfläche des Eintrittssektors sind zueinander rechtwinklig. Der Hauptträger und das dazu parallel geordnete Stabwerk sind parallel zur Symmetrieachse des Eintrittssektors - an der äußeren Seite des Eintrittssektors - in gleichmäßigen Abständen mit Durchführungsöffnungen versehen.

In diesen Durchführungsöffnungen sind Steuerstäbe montiert. Die Steuerstäbe sind auf der Strecke zwischen dem Hauptträger und dem Luftumlenkungssektor mit Leistungssteuerungselementen, vorzugsweise mit Federn versehen. Ferner ist das Luftleitblech, das die Stellung der Luftkraftanlage in die ständige Windrichtung gewährleistet, mit dem zylindrischen Gehäuse des Austrittssektors fest verbunden.

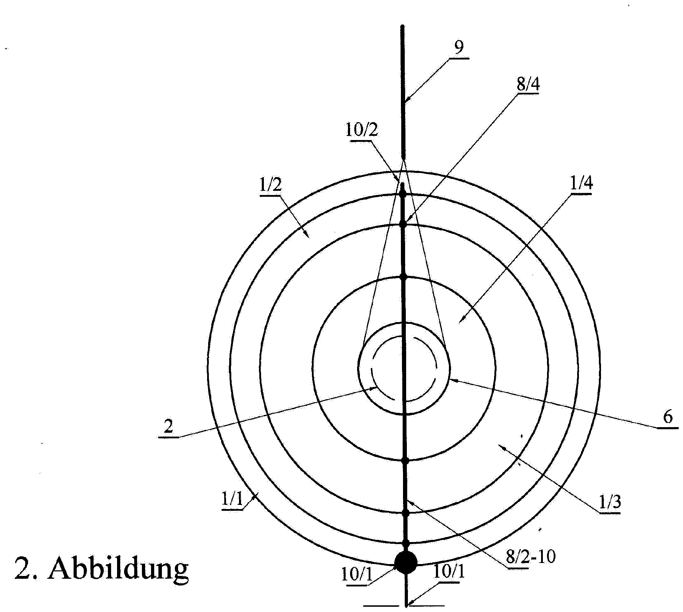

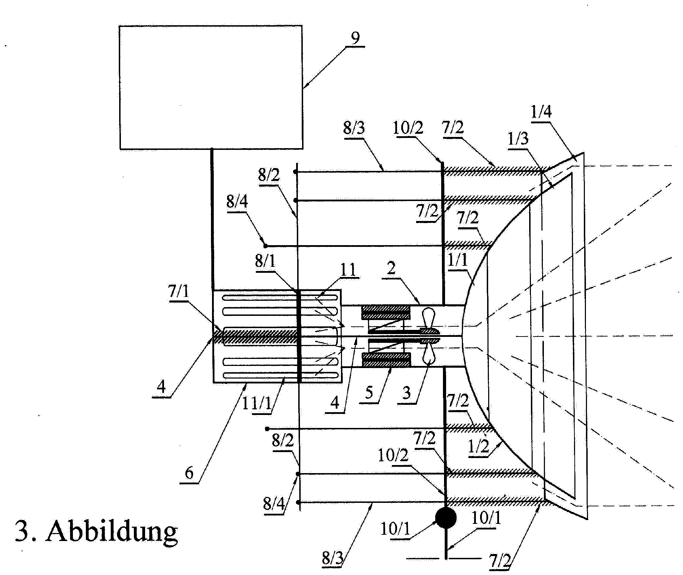

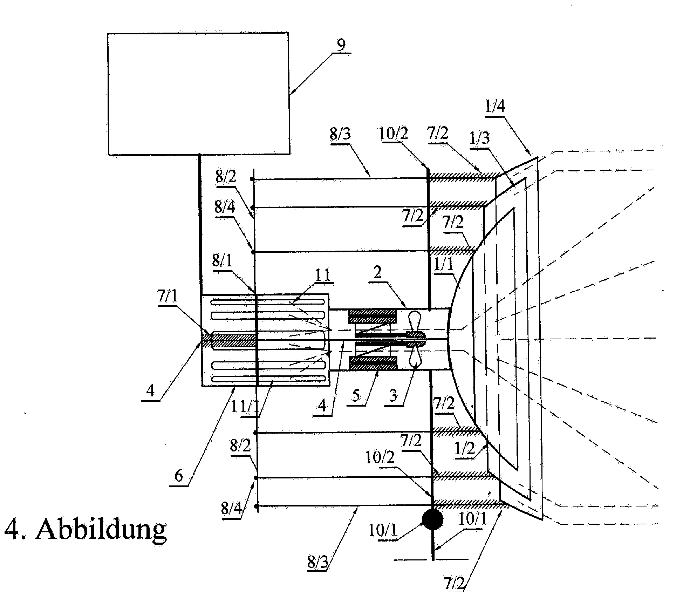

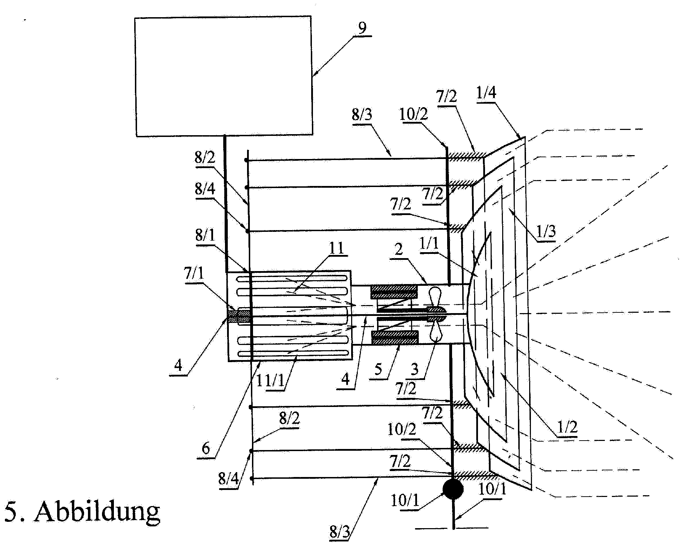

Die Erfindung wird ferner unter Bezugnahme auf die beigefügten Zeichnungen, die eine bevorzugte Ausführungsform der Windenergieanlage zeigen, im Detail beschrieben. Die Erfindung wird anhand der beigefügten Zeichnungen veranschaulicht.
Auf den Abbildungen 1, 3, 4, 5 ist eine schematische Schnittseitenansicht einer möglichen Ausführung der Windenergieanlage zu sehen;
Auf der Abbildung 2 ist die Ansicht einer Ausführung der Windenergieanlage zu sehen;

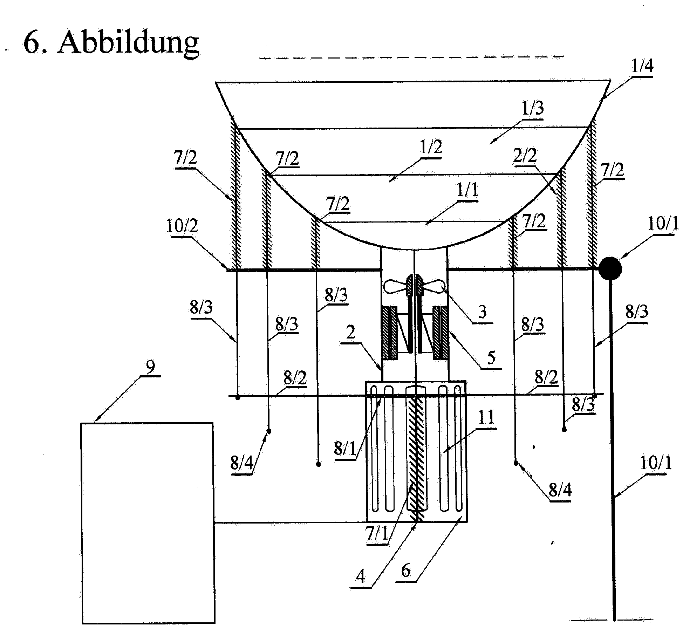

Die Abbildung 6 veranschaulicht den Schnitt des Sicherheitszustandes der Windenergieanlage.

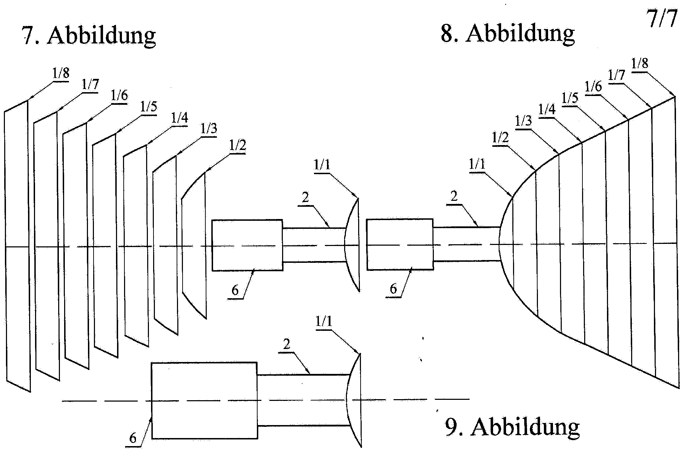

Die Abbildung 7 stellt das Modulsystem der Windenergieanlage dar.

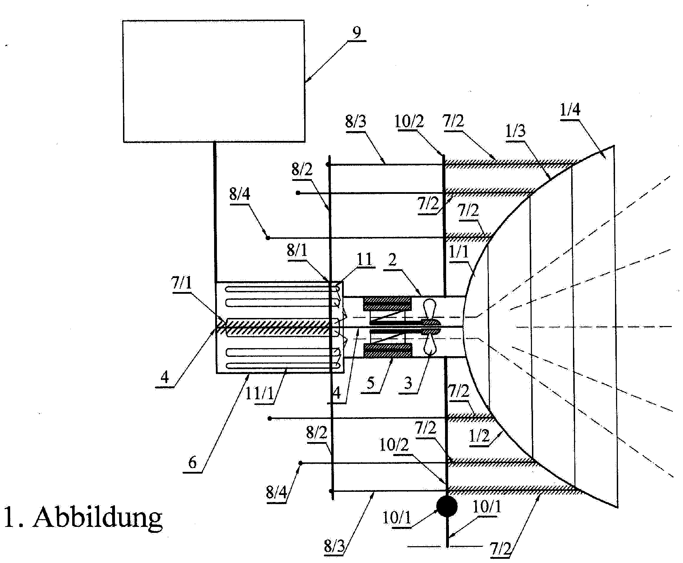

Auf den Abbildungen 1 und 2 verfügt die Windenergieanlage über einen Eintrittssektor 2 mit einem kreisförmigen Querschnitt, der vorne im Bereich des Eintritts des Windstroms mit dem Luftumlenkungssektor 1 verbunden ist. Der Luftumlenkungssektor 1 besteht aus den zur imaginären Symmetrieachse des Luftumlenkungssektor **1** parallel angeordneten luftumlenkenden Teilelementen **1/1**, **1/2**, **1/3**. Der axiale Schnitt des Luftumlenkungssektors ist vorzugsweise eine Parabel. Der Luftumlenkungssektor **1** ist symmetrisch mit Eintrittssektoren **2** verbunden. Der Querschnitt der Eintrittssektoren **2** ist vorzugsweise ein Kreis. Die Eintrittssektoren sind symmetrisch mit Austrittssektoren **6** verbunden. Die Eintrittssektoren **2** und die Austrittssektoren **6**, die geometrisch zylindrisch sind, bilden einen einheitlichen Raum, ferner sind die der Luftströmungsrichtung entgegengesetzten Seiten der Austrittssektoren **6** geschlossen. In der Symmetrieachse der Eintrittssektoren 2 werden die Windmotoren **3** montiert, und die vorzugsweisemit dem Windmotor **3** auf eine gemeinsame Achse montierte Energierückgewinnungseinrichtung **5**. Die zylindrische Manteloberfläche des Austrittssektors **6** ist mit axial verlängerten, in gleichmäßigen Abständen etwa rechteckigen Luftspalten **11** versehen. Diese Luftspalte **11** sorgen für die Entfernung der Luft aus der Windenergieanlage. Mit dem Austrittssektor **6** und dem Luftumlenkungssektor **1** steht eine Einstelleinrichtung in Verbindung. Ferner ist in dem Austrittsektor **6** eine, in die Achse des Austrittsektors **6** gefügte kreisförmige kompakte Scheiben, als Einstellrad **8/1** montiert. Das Einstellrad **8/1** ist mit dem, befestigten vertikalen Steuerstäben **8/2** verbunden, wobei die Anzahl der vertikalen Steuerstäbe **8/2** zwei, oder vorzugsweise ein Vielfaches von zwei sein kann. Diese vertikalen Steuerstäbe **8/2** sind in den an der Manteloberfläche des Austrittssektors **6** positionierten Luftspalten **11** geführt, und sie können in der Richtung der Achse des Austrittssektors **6** bewegt werden. Die ganze Konstruktion der Windenergieanlage wird unten, durch den unter dem Eintrittssektor **2** untergebrachten steuerbaren Gelenkmechanismus **10/1** und den daran befestigten Hauptträger **10/2** gehalten. Der Hauptträger **10/2** und die Manteloberfläche des Eintrittssektors **2** sind senkrecht zueinander. Der Hauptträger **10/2** und die ihm parallel positionierten Steuerstäbe **8/2** sind parallel zur Symmetrieachse des Eintrittssektors **2** in gleichmäßigen Abständen mit Durchführungsöffnungen versehen. In diesen Durchführungsöffnungen sind horizontale Steuerstäbe **8/3** montiert. Die horizontalen Steuerstäbe **8/3** sind auf der Strecke zwischen dem Hauptträger **10/2** und dem Luftumlenkungssektor **1** mit Leistungssteuerungselementen **7**/**2**, vorzugsweise mit Federn versehen.

An dem, dem Luftumlenkungssektor **1** gegenüberliegenden Ende der horizontalen Steuerstäbe **8/3** ist ein Verschlusselement **8/4** zur Sicherung des Abschlusses positioniert. Ferner ist das Luftleitblech **9**, wodurch die Einstellung der Windenergieanlage in die beständige Windrichtung sichergestellt wird, fest mit dem zylindrischen Gehäuse des Austrittsektors **6** verbunden. In Anbetracht einer weiteren bevorzugten Ausführung ist in der Achsenlinie des im Austrittsektor **6** positionierten Einstellrades **8/1** ein weiteres Leistungssteuerungselement **7/1**, vorzugsweise eine Feder untergebracht. Das Leistungssteuerungselement **7/2** befindet sich zwischen dem Einstellrad **8/1** und dem mit der Luftströmung versehenen Ende des Austrittsektors **6**. Im Sinne einer weiteren Ausführungsvariante ist die Energierückgewinnungseinrichtung außerhalb des Eintrittssektors **2** positioniert.

Gemäß einer anderen bevorzugten Ausführungsvariante ist der Axialschnitt des Luftumlenkungssektors **1** eine Parabel.

Gemäß einer anderen bevorzugten Ausführungsvariante ist der Axialschnitt des Luftumlenkungssektors **1** ein Kreis.

Gemäß einer anderen bevorzugten Ausführungsvariante ist der Axialschnitt des Luftumlenkungssektors **1** ein Kegelstumpf.

Die Windenergieanlage in den Abbildungen 1 und 2 funktioniert folgendermaßen: Die vom Wind entfachte Luftströmung prallt gegen die Oberfläche des Luftumlenkungssektors **1**. Der Luftumlenkungssektor **1** lenkt die Luftströmung in den Eintrittssektor **2**, wo sich die Luftgeschwindigkeit nach dem Prinzip der Kontinuität beschleunigt. Der in dem Kanal mit vorzugsweise kreisförmigem Querschnitt positionierte Windmotor **3** beginnt zu rotieren, und damit zusammen die Energierückgewinnungseinrichtung **5**. Die den Windmotor **3** und die Energierückgewinnungseinrichtung **5** verlassende Strömung gelangt in den Austrittssektor **6** und prallt gegen die Oberfläche des im Austrittssektor **6** positionierten Einstellrades **8/1**. Dann wird die Luft die Windenergieanlage durch die am Gehäuse des Mantels des Austrittssektors **6** ausgebildeten Luftspalte **11** verlassen. Dann ist die tatsächliche verfügbare Luftspaltfläche viel kleiner, als wenn sich das Einstellrad **8/1** im Austrittssektor **6**, an dessen Ende befinden würde. Der Druck der Luft steigt und die Luftspalte **11** sind nicht in der Lage, eine ausreichende Menge an Luft abzuführen, der Druck wird erhöht, und das Einstellrad **8/1** wird durch die Luftströmung in der entgegengesetzten Richtung axial verschoben. Gleichzeitig mit dem Einstellrad **8/1** bewegt sich das vertikale **8/2**, dann auch das mit diesem zwangsläufig verbundene horizontale **8/3** Stabwerk mit Hilfe des an ihren Enden befindlichen Verschlusselements **8/4**. Das horizontale Stabwerk **8/3** bewegt die einzelnen Teilelemente **1/1,1/2, 1/3** des Luftumlenkungssektors **1**. Die Energie des einkommenden Windes verringert sich, weil die überschüssige Energie sich durch die sich trennende, nicht mehr einheitliche Oberfläche des Luftumlenkungssektors **1** in Richtung des Eintrittssektors **2** dadurch reduziert, dass zwischen den Luftumlenkungsteilelementen **1/1**, **1/2**, **1/3** ein *Öffnungs*-Spalt entsteht. Wenn das Luftumlenkungsteilelement **1/1** mit Hilfe des horizontalen Stabwerks **8/3** in eine äußere Position gerät, dann werden im Falle der kontinuierlichen Verstärkung der Windstärke mit einer weiteren Verlagerung des Einstellrades **8/1** die weiteren Elemente 1/2, 1/3, usw. geöffnet.

Der Prozess dauert bis zur Öffnung des letzten Elements, während die Leistungssteuerungselemente **7/1, 7/2** unter Last kommen. Das Leitblech, das für die Einstellung der Windenergieanlage in eine ständige Windrichtung sorgt, ist mit dem zylindrischen Gehäuse des Austrittssektors **6**, und dadurch mit der ganzen Vorrichtung fest verbunden. So kann durch den unter dem Eintrittssektor positionierten Gelenkmechanismus sichergestellt werden, dass der Eintrittsquerschnitt des Eintrittssektors **2** der vorherrschenden Windrichtung immer rechtwinklig ist. Mit der Abnahme der Windkraft wird der ursprüngliche Zustand mit der Arbeit durch das Steuersystem **8** von den Leistungssteuerungselementen **7/1** und **7/2** gemeinsam wiederhergestellt.

Die mit der Erfindung verbundenen vorteilhaften Wirkungen sind wie folgt: Bei den Lösungen des Standes der heutigen Technik gibt es eine Ausgestaltung, (siehe WO 2012/088562 A1, PCT-Anmeldung), wobei die Eintritts- und Austrittsabschnitte der vorherrschenden Windgeschwindigkeit entsprechend gesteuert werden können, aber es fehlt die kombinierte Lösung, wo die Vorrichtung auch die Änderungen in der Windrichtung berücksichtigt. Das ist wichtig, damit die Vorrichtung in den Bereichen der minimalen und maximalen (extremen) Windgeschwindigkeit mit bestmöglicher Effizienz zu bedienen ist.

### Liste der Referenzzeichen

1 geteilter Luftumlenkungssektor
1/1, 1/2, 1/3...1/8... geteilte Luftumlenkungssektor-Elemente
2 Lufteintrittssektor
3 Windmotor
4 Achse des Einstellrades
5 Energierückgewinnungseinrichtung
6 Luftaustrittssektor
7/1 das in dem Lufteintrittssektor untergebrachte Leistungssteuerungselement
7/2 das an den horizontale Steuerstäben untergebrachte Leistungssteuerungselement
8/1 Einstellrad
8/2 vertikaler Steuerstab
8/3 horizontaler Steuerstab
8/4 Verschlusselement
9 Luftleitblech
10/1 Gelenkmechanismus
10/2 Hauptträger
11 Luftspalt

## Patentansprüche

1. Windenergieanlage, insbesondere zur Erzeugung elektrischer Energie, die über einen Lufteintrittssektor *(2)* verfügt, der im Windeingangsbereich mit einem Luftumlenkungssektor verbunden ist, wobei der Lufteintrittssektor *(2)* mit *eine*m Luftaustrittssektor *(6)* einen einheitlichen Raum bildet, *der* geometrisch zylindrisch *ist, der Luftumlenkungssektor hat in Richtung des Lufteintrittssektor (2) einen* sich *kontinuierlich verengenden Querschnitt, am Luftumlenkungssektor gibt* es Öffnungsspalte, wobei der Luftaustrittssektor *(6)* mit einem Luftleitblech *(9)*, das für die Einstellung in die Windrichtung sorgt, fest verbunden ist, und wobei der in der Symmetrieachse des Lufteintrittssektors *(2)* montierte Windmotor *(3)* mit einer Energierückgewinnungseinrichtung *(5)* verbunden ist, und die Windenergieanlage mit einem eingebauten Steuermechanismus versehen ist, **dadurch gekennzeichnet, dass** *der Luftumlenkungssektor ein geteilter Luftumlenkungssektor (1) ist, der aus miteinander verbundenen Luftumlenkungssektor-Elementen (1*/*1, 1*/*2, 1*/*3...1*/*8...) besteht, die* Öffnungsspalte sich *zwischen den Luftumlenkungssektor-Elementen (1*/*1, 1*/*2, 1*/*3...1*/*8...)* befinden, wobei die der Richtung des Luftstroms gegenüberliegende Seite des Luftaustrittssektors (6) geschlossen ist, und die zylindrische Manteloberfläche des Luftaustrittssektors (6) in gleichmäßigen Abständen mit rechteckig geformten Luftspalten (11) versehen ist, ferner ist im Luftaustrittssektor (6) ein an die Achse (4) angebrachtes Einstellrad (8/1) positioniert ist, und dazu ein axial verbundenes Leistungssteuerungselement (7/1) angeordnet ist, und mit dem Einstellrad (8/1) radial ein vertikales Stabwerk (8/2) verbunden ist, ferner ist der Lufteintrittssektor (2) mit einem Hauptträger (10/2) verbunden, wobei der Hauptträger (10/2) mit dem Sockel der Windenergieanlage durch einen Gelenkmechanismus (10/1) angeordnet ist, ferner ist der Hauptträger (10/2) und das zu ihm parallel angeordnete vertikale Stabwerk (8/2) mit Durchführungsöffnungen versehen, und in diese Durchführungsöffnungen sind horizontale Steuerstäbe (8/3) durchgeführt, und die horizontalen Steuerstäbe (8/3) sind auf der Strecke zwischen dem Hauptträger (10/2) und dem geteilten Luftumlenkungssektor (1) mit Leistungssteuerungselementen (7/2) versehen, ferner sind die horizontalen Steuerstäbe (8/3) an einem Ende mit einem Elementen des Luftumlenkungssektors (1/1, 1/2, 1/3...1/8...), am anderen Ende mit den Verschlusselementen (8/4) verbunden.

2. Die Windenergieanlage nach Anspruchspunkt 1, **dadurch gekennzeichnet, dass** der auf die Symmetrieachse des geteilten Luftumlenkungssektors (1) projizierte Schnitt eine Parabel ist.

3. Die Windenergieanlage nach Anspruchspunkt 1, **dadurch gekennzeichnet, dass** der auf die Symmetrieachse des geteilten Luftumlenkungssektors (1) projizierte Schnitt ein Kreis ist.

4. Die Windenergieanlage nach Anspruchspunkt 1, **dadurch gekennzeichnet, dass** der auf die Symmetrieachse des geteilten Luftumlenkungssektors (1) projizierte Schnitt ein Kegelstumpf ist.

5. Die Windenergieanlage nach Anspruchspunkt 1, **dadurch gekennzeichnet, dass** die zwischen dem Hauptträger (10/2) und dem geteilten Luftumlenkungssektor (1) untergebrachten Leistungssteuerungselemente (7/2) Federn sind.

6. Die Windenergieanlage nach Anspruchspunkt 1, **dadurch gekennzeichnet, dass** das zwischen dem Einstellrad (8/1) und der der Windrichtung gegenüberliegenden Seite des Luftaustrittsektors (6) untergebrachte Leistungssteuerungselement (7/1) eine Feder ist.

7. Die Windenergieanlage nach Anspruchspunkt 1, **dadurch gekennzeichnet, dass** die Anzahl der an das Einstellrad (8/1) befestigten vertikalen Steuerstäbe (8/2) ein Vielfaches von zwei ist.

8. Die Windenergieanlage nach Anspruchspunkt 1, **dadurch gekennzeichnet, dass** die Energierückgewinnungseinrichtung (5) ein elektrischer Generator ist.

9. Die Windenergieanlage nach Anspruchspunkt 1, **dadurch gekennzeichnet, dass** die Energierückgewinnungseinrichtung (5) außerhalb des Eintrittssektors (2) untergebracht ist.

## Claims

1. A windpower plant, especially for the production of electrical energy, which has an air inlet sector (2), which is connected to the wind flow entry area by the air deflector sector, where the air inlet sector (2) forms a single space with the air outlet sector (6), which is geometrically cylindrical, the air deflector sector has a continuously narrowing cross-section in the direction of the air inlet sector (2), where the air deflector sector is equipped with an opening gap, and where the air outlet sector (6) is firmly connected to an air deflector plate (9) for setting wind direction, where the wind motor (3) that is mounted in the symmetry axis of the air inlet sector (2) is connected to an energy recovery device (5) and the windpower plant is equipped with a built-in control device, **characterised in that** the air deflector sector is a split air deflector sector (1), which is made up of connected air deflector sector elements (1/1, 1/2, 1/3 ... 1/8 ...), there are the opening gaps in the deflector sector between the air deflector sectors elements (1/1, 1/2, 1/3 ... 1/8 ...), the a side of the air outlet sector (6) opposite the air flow direction is closed and the cylindrical shell surface of the air outlet sector (6) is axially located with even spacing, with approximately rectangular air gaps (11), and a control disc (8/1) fitted to the shaft (4) in the air outlet sector (6) and an axially connected force element (7/1) is provided and a vertical control rod (8/2) is connected to the control disc (8/1) in the radial direction, and a main runner (10/2) is connected to the air inlet sector (2), where the main runner (10/2) is connected to the base of the windpower plant by a hinged structure (10/1), furthermore, the main runner (10/2) and the parallel vertical control rod (8/2) are equipped with through holes, and in these through holes there are horizontal control rods (8/3) inserted, and the horizontal control rods (8/3) on the section between the main runner (10/2) and the split air deflector sector (1) are equipped with force elements (7/2), furthermore, the horizontal control rods (8/3) are connected to one of the air deflector sector elements (1/1, 1/2, 1/3 ... 1/8 ...) at one end, and are connected to the locking elements (8/4) at the other end.

2. A windpower plant according to claim 1, **characterised in that** its intersection projected on the symmetry axis of the split air deflector sector (1) is a parabola.

3. A windpower plant according to claim 1, **characterised in that** its intersection projected on the symmetry axis of the split air deflector sector (1) is circular.

4. A windpower plant according to claim 1, **characterised in that** its intersection projected on the symmetry axis of the split air deflector sector (1) is a truncated cone.

5. A windpower plant according to claim 1, **characterised in that** the force elements (7/2) placed between the main runner (10/2) and the split air deflector sector (1) are springs

6. A windpower plant according to claim 1, **characterised in that** the regulating force element (7/1) fixed between the regulator disc (8/1) and the opposite the airflow direction side of the outlet sector (6) is a spring.

7. A windpower plant according to claim 1, **characterised in that** the number of the vertical control rods (8/2) fixed to the control disc (8/1) is a multiple by two.

8. A windpower plant according to claim 1, **characterised in that** the energy recovery device (5) is an electric generator.

9. A windpower plant according to claim 1, **characterised in that** the energy recovery device (5) is located outside the inlet sector (2).

## Revendications

1. Centrale éolienne, destinée particulièrement à la production de l'énergie électrique, munie d'un secteur d'entrée d'air (2), qui est connecté à un secteur déflecteur dans la zone d'entrée du flux d'air où le secteur d'entrée d'air (2) constitue un espace unique avec un secteur de sortie d'air (6), ayant une forme cylindrique, la section du secteur déflecteur se rétrécie progressivement vers le secteur d'entrée d'air (2), où le secteur déflecteur est muni d'un évent s'ouvrant, et où le secteur de sortie d'air (6) est lié solidement à un déflecteur (9) assurant la position dans la direction du vent, où une turbine éolienne (3) montée sur l'axe de symétrie du secteur d'entrée d'air (2) est connectée à un installation pour l'exploitation de l'énergie (5), et la centrale éolienne est équipée d'un dispositif régulateur, **a comme caractéristique** que le secteur déflecteur est un secteur déflecteur divisé (1), se composant d'éléments déflecteurs liés les uns aux autres (1/1, 1/2, 1/3...1/8...), où les évents s'ouvrant du secteur déflecteur se trouvent entre les éléments déflecteurs (1/1, 1/2, 1/3...1/8...), le côté opposé au flux d'air du secteur de sortie d'air (6) est fermé et la surface latérale cylindrique du secteur de sortie d'air (6) est munie d'évents (11) approximativement rectangulaires, avec espacements réguliers et axialement prolongés, en outre, dans le secteur de sortie d'air (6) sont rangés un disque régulateur (8/1) placé sur un axe (4) et un élément de puissance (7/1) lié à celui-ci en direction axiale, et des barres régulatrices verticales (8/2) sont connectées en direction radiale au disque régulateur (8/1), en outre, un support principal (10/2) est lié au secteur d'entrée d'air (2) où le support principal (10/2) est lié au pied de la centrale éolienne par structure articulée (10/1), en outre, le support principal (10/2) et les barres régulatrices verticales (8/2) rangées parallèlement à celui-ci sont munis d'orifices traversants, et par ces orifices traversants sont passent des barres régulatrices horizontales (8/3), et les barres régulatrices horizontales (8/3) sont munies d'éléments de puissance (7/2) sur le tronçon entre le support principale (10/2) et le secteur déflecteur divisé (1), en outre, les barres régulatrices horizontales (8/3) sont connectées par une extrémité aux détracteurs (1/1, 1/2, 1/3...1/8...), par l'autre extrémité, aux éléments assurant le verrouillage (8/4).

2. La centrale éolienne prévue par le point 1 **a comme caractéristique** que section projetée sur l'axe de symétrie du secteur déflecteur divisé (1) est parabolique.

3. La centrale éolienne prévue par le point 1 **a comme caractéristique** que sa section projetée sur l'axe de symétrie du secteur déflecteur divisé (1) est ronde.

4. La centrale éolienne prévue par le point 1 **a comme caractéristique** que sa section projetée sur l'axe de symétrie du secteur déflecteur divisé (1) est tronconique.

5. La centrale éolienne prévue par le point 1 **a comme caractéristique** que les éléments de puissance (7/2) placés entre le support principal (10/2) et le secteur déflecteur divisé (1) sont des ressorts.

6. La centrale éolienne prévue par le point 1 **a comme caractéristique** que l'élément de puissance (7/1) intégré entre le disque régulateur (8/1) et le côté opposé à la direction du vent du secteur de sortie (6) est un ressort.

7. La centrale éolienne prévue par le point 1 **a comme caractéristique** que le nombre des barres régulatrices verticales (8/2), fixées au disque régulateur (8/1) est un multiple de deux.

8. La centrale éolienne prévue par le point 1 **a comme caractéristique** que l'installation pour l'exploitation de l'énergie (5) est un générateur électrique.

9. La centrale éolienne prévue par le point 1 **a comme caractéristique** que l'installation pour l'exploitation de l'énergie (5) est placée à l'extérieur du secteur d'entrée (2).
